Europäisches Patentamt

European Patent Office

Office européen des brevets

(11) Publication number: **0 256 960**
**A1**

## EUROPEAN PATENT APPLICATION

(21) Application number: **87630089.8**

(22) Date of filing: **14.05.87**

(51) Int. Cl.⁴: **B 23 Q 1/16**
B 23 Q 16/02, F 16 H 1/16,
F 16 H 57/02

(30) Priority: **11.07.86 US 884530**

(43) Date of publication of application:
**24.02.88 Bulletin 88/08**

(84) Designated Contracting States:
**AT BE CH DE ES FR GB GR IT LI LU NL SE**

(71) Applicant: **EMERSON ELECTRIC CO.**
**8100 W. Florissant Avenue**
**St. Louis Missouri 63136 (US)**

(72) Inventor: **Mang, Josef**
**615 Roselle Court**
**Lake Villa Illinois 60046 (US)**

**Sandrock, Don G.**
**422 Kensington Drive**
**McHenry Illinois 60050 (US)**

**Gruhn, Darrell E.**
**1231 N. Channel**
**Round Lake Beach Illinois 60073 (US)**

(74) Representative: **Weydert, Robert et al**
**OFFICE DENNEMEYER S.à.r.l. P.O. Box 1502**
**L-1015 Luxembourg (LU)**

The title of the invention has been amended (Guidelines for Examination in the EPO, A-III, 7.3).

(54) **Bearing for a large indexing drive.**

(57) A bearing apparatus is disclosed for use as a substitute for the conventional bearing in a cam-driven index drive (20). The bearing apparatus includes dual purpose cam followers (44) which are used for both motion control of the index drive (20), as well as to rotatably bear against a control plate (32) carried by the index drive's housing (22) for restricting radial shifting of the index drive's follower wheel assembly (24). Additional bearing followers (50) carried by the follower wheel assembly (24) engage hardened ways (28) formed on the housing (22) to restrict axial movement of the follower wheel (36). Optional heavy load bearings (60) can be utilized to additionally restrict axial shifting of the follower wheel (36). The disclosed bearing apparatus eliminates costly four-point contact bearings and permits use of a compact housing.

FIG. 2

**Description**

This invention relates to cam-driven index drive mechanisms, and more specifically, to bearing arrangements utilized in supporting such an index drive's follower wheel assembly relative to the drive's housing.

Cam-driven index drives, especially of the large diameter variety, require relatively expensive bearings to support the rotating combination of output or dial plate, follower wheel, and separate follower wheel hub, if any, vis-a-vis the index drive's housing. That is, when the follower wheel assembly is being rotatably indexed by the associated cam drive, bearing support is required between the follower wheel assembly and the housing. It is also desirable to prevent both axial shifting of the follower wheel such as cocking thereof due to heavy loads being applied thereon, and radial shifting. Such elimination or minimization of radial and axial shifting of the follower wheel assembly vis-a-vis the index drive's housing is desired so as to minimize component wear and, more importantly, to provide accurate positioning of workpieces being indexed by the index drive.

Prior art index drives typically utilized a special so-called four-point contact bearing, one variety of which is known as a "Kaydon" (trademark) bearing. However, such four-point contact bearings have several disadvantages. First, since such bearings have close tolerances, they are relatively expensive, especially for large diameter index drives; a different bearing must be specially made for each different size of index drive. Second, their manufacture normally requires long lead times. Third, the use of four-point contact bearings dictates that there be an equally large index housing to provide support for the four-point contact bearing at the outer edge of the follower wheel. This further increases the cost of index drives using such prior art bearings.

The present invention eliminates such expensive four-point contact bearings and their associated oversized housings by using the cam followers not only to provide motion control via the cams, but also to restrict radial shifting of the follower wheel assembly. This is done by having the cam followers be rotatably journalled against a follower control plate carried by the housing. Also, an additional set of followers, namely bearing followers also carried by the follower wheel assembly, are rotatably journalled against hardened ways on the housing. They restrict any axial shifting of the follower wheel assembly.

Thus, it is a primary object of the present invention to provide a combination of cam followers, bearing followers and a follower control plate for a cam-driven index drive whereby axial and radial shifting of the follower wheel assembly is prohibited.

It is a further object of the present invention to provide a relatively inexpensive bearing apparatus for index drives which eliminates the need for four-point contact bearing assemblies and which can be radially made from a limited number of components regardless of the size of the index drive.

It is a still further object of the present invention to provide an improved bearing assembly for a large diameter index drive having optional heavy load bearings used to prevent flexing of the follower wheel under unusually heavy loading situations.

The means by which the foregoing and other objects of the present invention are accomplished and the manner of their accomplishment will be readily understood from the following specification upon reference to the accompanying drawings, in which:

Fig. 1 is a plan view of an index drive incorporating the bearingless bearing mechanism of the present invention, with certain elements broken away or shown in phantom for better viewing; and

Fig. 2 depicts an enlarged side sectional of the bearing assembly of the present invention, taken along lines 2-2 of Fig. 1.

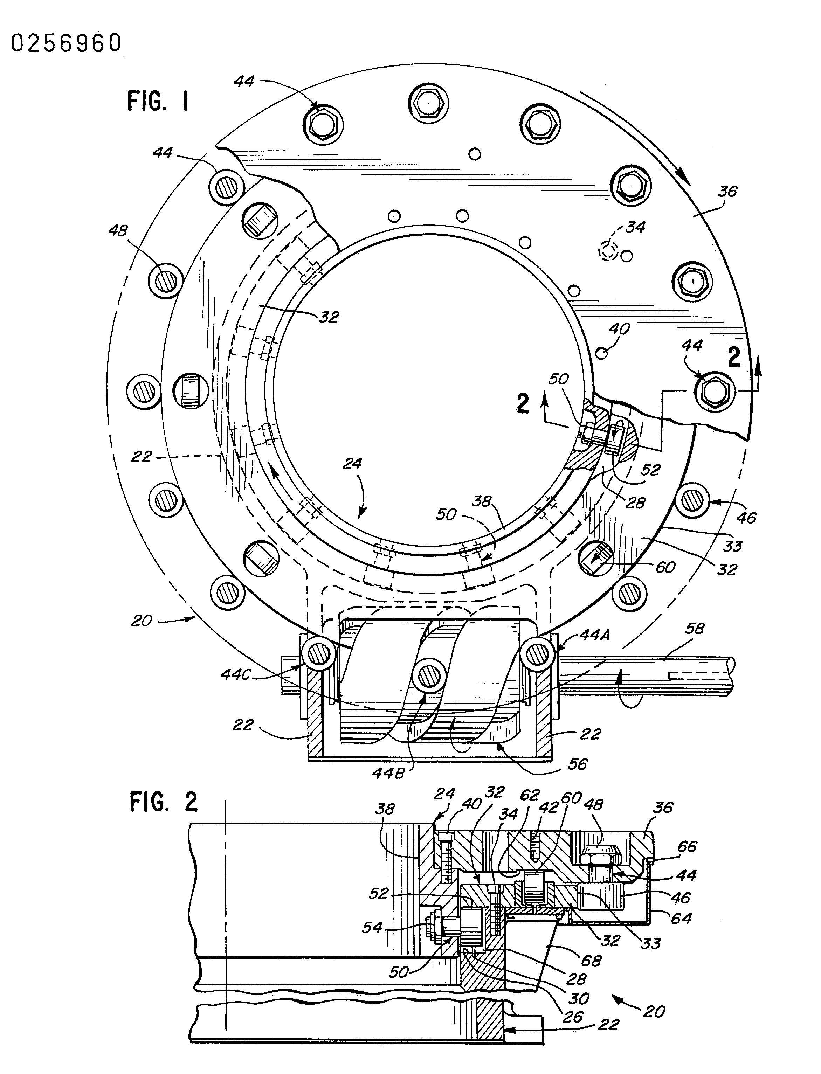

Having reference to the drawings, wherein like reference numerals indicate corresponding elements, there is shown in Fig. 1 an index drive 20 including a base housing 22 and a follower wheel assembly generally noted by reference numeral 24. An annular shoulder 26 formed in the wall of housing 22 carries hardened ways 28, preferably formed from suitably tempered steel, which are fastened to housing 22 by fasteners 30. An annular-shaped follower control plate 32 is fastened to the housing 22 by threadened fasteners 34 so that its interior edge (left edge of plate 32 in Fig. 2) is generally coextensive with the interior surface of housing 22, while the exterior edge 33 (right edge of control plate 32 in Fig. 2) extends outwardly of the housing wall 22. It will be understood that the outer peripheral edge 33 is preferably hardened in similar fashion to the hardened ways 28.

The follower wheel assembly 24 comprises a follower wheel 36 rotatably journalled to the housing 22 in a manner to be described later herein, and a pilot wheel hub 38 fastened to the follower wheel 36 by fasteners 40. The follower wheel 36 and pilot wheel hub 38 operate in an integral fashion; they could be formed as a unitary piece if desired. As is well known, a dial plate carrying miscellaneous work stations (neither shown) is normally mounted to the upper surface of follower wheel 36 of such index drives through suitable threaded fasteners engaging tapped holes, such as at 42 (see Fig. 2).

A series of spaced cam followers 44 comprising rollers 46 and fasteners 48 are mounted to follower wheel 36 for operation on respective vertical axes adjacent the outer periphery thereof (see Fig. 2). Additionally, a series of spaced bearing followers 50 are mounted on respective horizontal axes to the lower portion of pilot wheel hub 38. The followers 50 comprise rollers 52 and threaded fasteners 54.

Although not forming a part of the present invention, there is seen in Fig. 1 a cam drive unit generally denoted by reference numeral 56 as mounted on housing 22 and driven by a motor-driven input shaft 58. Preferably the cam drive unit 56 comprises a roller-gear type cam or barrel cam. As seen in Fig. 1, the cam followers 44 are consecutively engaged by the cam drive 56 in a well known manner causing an indexed rotation of follower wheel 36 and any dial plate (not shown) mounted thereto. Besides being engaged by the cam drive 56, the cam followers 44 also engage the outer peripheral edge 33 of follower control plate 32, except in that area adjacent the cam drive 56 where control plate 32 is cut away. That is, as seen in Fig. 1, the cam follower 44A represents a cam follower leaving the control plate 32 and entering the cam track of cam drive 56, follower 44B represents a follower being pulled through the cam 56 by the rotation thereof, and follower 44C represents the location of a cam follower regaining contact with control plate 32 after exiting the cam drive track.

It will be understood that, during the assembly of the index drive 20, a slight preload, i.e., forced engagement, between the cam followers 44 and the control plate 32 is introduced to insure minimum runout of the follower wheel assembly 24 and the positive positioning of the cam followers 44 relative to the drive cam unit 56.

It will be further understood that there is normally a clearance above the roller 52 of bearing follower 50 i.e., roller 52 is slightly spaced from the lower edge of the follower control plate 32 in that area,since the rollers 52 are intended to normally engage the hardened ways 28. However, should there be an unusual load placed on the follower wheel assembly 24 so as to lift up or cock a portion of it, then the roller 52 (shown in Fig. 2) would lift out of engagement from the hardened way 28 and bear against the underside of control plate 32, thereby minimizing such cocking.

An additional set of rollers, namely heavy load bearing rollers 60, may be optionally used. These heavy load bearing rollers 60 are attached to the control plate 32 and operate to support the underside of the follower wheel 36 approximately midway along its width (see Fig. 2). The lower surface portion 62 of follower wheel 36 is preferably hardened for proper wear and engagement with the heavy load bearing rollers 60.

As will be seen in Fig. 2, a cover assembly 64 is appropriately fastened to the control plate 32, and has a sliding seal 66 which bears against the rotating follower wheel 36. The cover assembly 64 prevents the loss of lubricant from the moving components of the present invention, as well as the entry of dirt and foreign matter into the same. Additionally, wing supports 68 can be formed as part of the housing 22, beneath each of the locations where the heavy load bearing rollers 60 are formed in the control plate so as to provide direct support for the same.

Turning to the operation of the present invention, in a well known fashion the rotation of the cam drive 56 causes the cam followers 44, and hence the follower wheel assembly 24 to which they are attached, to be rotatably indexed in a clockwise direction (from right to left, see direction of arrow in Fig. 1). Thus, the cam followers 44 are used to provide motion control to the follower wheel from the cam drive 56. Further, the cooperative, preloaded engagement of the cam followers 44 with the hardened outer surface 33 of the control plate 32 acts to restrict any radial movement of the follower wheel assembly 24 in operation. Thus, the cam followers 44 serve dual purposes, since they also radially stabilize the follower wheel 36 vis-a-vis the control plate 32 and housing 22.

In similar fashion, the bearing followers 50 also carried by the follower wheel assembly 24 have cooperative engagement with the hardened ways 28 on housing 22. This second engagement of follower wheel assembly 24 to housing 22, but in a direction normal to the first such engagement discussed above, prevents any axial shifting of the follower wheel assembly 24.

Thus, regardless of the amount of load placed at any position on the follower wheel assembly 24 or associated dial plate (not shown), and regardless of whether such loads are axially or radially directed, the present invention's dual-purpose cam followers 44 and bearing followers 50 cooperate to prevent any unwanted radial and axial shifting of the follower wheel assembly 24. And this is done in an inexpensive manner without recourse to the expensive four-point contact bearings of the prior art.

Moreover, the housing 22 can be of a reduced size, vis-a-vis the relative size of follower wheel 36, since there is no need for the housing 22 to extend completely out to the edge of the follower wheel 36. This is contrary to the prior art bearing assemblies, where support was needed directly adjacent the four-point contact bearings. The dual purpose cam followers 44, the additional bearing followers 50, and the control plate 32 can all be made from radially available materials or components, thereby eliminating the need for specially-made, expensive four-point contact bearings of the prior art. Hence, the overall cost of manufacturing a large cam-driven index drive is substantially reduced through use of the present invention's improved bearing apparatus.

From the foregoing, it is believed that those skilled in the art will readily appreciate the unique features and advantages of the present invention over previous types of bearing assemblies for cam-driven index drives. Further, it is to be understood that while the present invention has been described in relation to a particular preferred embodiment as set forth in the accompanying drawings and as above described, the same nevertheless is susceptible to change, variation and substitution of equivalents without departure from the spirit and scope of this invention. It is therefore intended that the present invention be unrestricted by the foregoing description and drawings, except as may appear in the following appended claims.

## Claims

1. A cam-driven index drive including a housing, a motor-driven drive cam, and a follower wheel assembly rotatably mounted on the housing for indexed rotation by the drive cam, the improvement comprising:

follower control plate means supported by the housing;

first roller follower means rotatably mounted on the follower wheel assembly and operable to engage both the drive cam and said follower control plate means;

second roller follower means rotatably mounted on the follower wheel assembly and operable to engage either the housing or said control plate means, whereby the cooperative engagement of said first roller follower means with said follower control plate means and of said second roller follower means with said follower control plate means or said housing act to prevent radial and axial shifting of the follower wheel assembly.

2. The invention of claim 1, wherein said first follower means acts to prevent radial shifting of the follower wheel assembly.

3. The invention of claim 1, wherein said first and second follower means are respectively mounted on axes normal to one another.

4. The invention of claim 1, and heavy load roller means mounted to the housing and operable to further rotatably support the follower wheel assembly when heavy loads are carried thereby.

5. Improved bearing apparatus for an index drive including a housing, a drive cam, and a follower wheel rotatably mounted to the housing and drivably indexed by the drive cam, the bearing apparatus comprising:

a follower control plate supported by the housing;

first and second sets of roller followers rotatably mounted to the follower wheel, said first set of roller followers having engagement with the drive cam to provide motion control to the follower wheel and further having bearing engagement with said follower control plate so as to prevent shifting of the follower wheel, and said second set of roller followers operable to rotatably bearingly engage either the housing or said follower control plate to further prevent shifting of the follower wheel.

6. The invention of claim 1, wherein said first set of roller followers prevents radial shifting of the follower wheel, and further, said second set of roller followers prevents axial shifting of the follower wheel.

0256960

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 789 683 (STAHL) <br> * Column 2, lines 63-70 * <br><br> --- | 1 | B 23 Q 1/16 <br> B 23 Q 16/02 <br> F 16 H 1/16 <br> F 16 H 57/02 |
| A | DE-A-3 233 135 (LEUPOLD) <br><br> --- | 1,3,5,6 | |
| A | US-A-3 829 076 (HUGH) <br><br> --- | 1,4 | |
| A | US-A-3 153 355 (OPPERTHAUSER) <br><br> --- | 1 | |
| A | DE-C- 866 121 (REITHMAIER) <br> * Page 2, lines 115-121 * <br><br> --- | 2 | |
| A | FR-A-2 205 155 (BÜHLER) <br><br> --- | 1 | TECHNICAL FIELDS SEARCHED (Int. Cl.4) |
| A | US-A-2 852 960 (BREMS) <br><br> ----- | 1 | B 23 Q <br> F 16 H |

The present search report has been drawn up for all claims

| Place of search | Date of completion of the search | Examiner |
|---|---|---|
| THE HAGUE | 23-09-1987 | DE GUSSEM J.L. |